# EUROPEAN PATENT SPECIFICATION

(11) **EP 1 443 286 B1**
(45) Date of publication and mention of the grant of the patent: **21.11.2012**
(21) Application number: 02775318.5
(22) Date of filing: 10.10.2002
(51) Int. Cl.: F25B 1/00, F04C 23/00, F04C 29/02

(54) **REFRIGERATING EQUIPMENT**
KÜHLEINRICHTUNG
MATERIEL POUR LA REFRIGERATION

(30) Priority: 19.10.2001 JP 2001322760
(43) Date of publication of application: 04.08.2004
(73) Proprietor: Toshiba Carrier Corporation, Tokyo 105-8001 (JP)
(72) Inventor: YAMAMOTO, Toshihiro, Mishima-shi, Shizuoka 411-0026 (JP)
(74) Representative: Henkel, Breuer & Partner
(86) International application number: PCT/JP2002/010535
(87) International publication number: WO 2003/036188

(56) References cited:
- WO-A-95/35462
- JP-A- 8 005 169
- JP-A- 8 005 169
- JP-A- 9 021 571
- JP-A- 10 141 785
- US-A- 5 327 997

## Description

### Technical Field

This invention relates to a refrigerating apparatus provided with a plurality of compressors according to the preamble portion of claim 1.

### Background Art

A compressor mounted in a refrigerating apparatus is covered by a closed casing. The closed casing contains a lubricating oil in order to maintain lubrication for components in the closed casing. Some of the lubricating oil, along with a refrigerant that is discharged from the compressor, flows out into the refrigerating cycle. The lubricating oil having flowed out, along with the refrigerant, circulates in the refrigerating cycle and is sucked into the compressor.

In the case of a refrigerating apparatus that is provided with a plurality of compressors, different quantities of lubricating oil flow out from the compressors, individually, and different quantities of lubricating oil return to the compressors, individually. Therefore, the respective closed casings of the compressors contain different quantities of lubricating oil.

If the lubricating oil in the closed casings becomes scarce, good lubrication cannot be maintained for the components in the closed casings.

JP 08 005 169 A discloses a refrigerating apparatus on which the preamble portion of claim 1 is based.

### Disclosure of Invention

The object of this invention is to provide a refrigerating apparatus, in which surplus portions of a lubricating oil in closed casings of compressors can be quickly supplied to and from the compressors.

A refrigerating apparatus of the present invention comprises the features of Claim 1. Preferred embodiments are defined in the dependent claims.

### Brief Description of Drawings

FIG. 1 is a diagram showing a configuration according to first, second, third, and fourth examples;
FIG. 2 is a diagram showing the configuration of a principal part of the second example;
FIG. 3 is a diagram showing a configuration according to a fifth, example and first and second embodiments;
FIG. 4 is a diagram showing the configuration of a principal part of the first and second embodiments;
FIG. 5 is a diagram showing a configuration according to a sixth example ;
FIG. 6 is a diagram showing a configuration according to a seventh example ;
FIG. 7 is a timing chart for illustrating the operation of the seventh example ;
FIG. 8 is a timing chart for illustrating the operation of an eighth example ;
FIG. 9 is a diagram showing the configuration of a principal part of a ninth example ;
FIG. 10 is a diagram showing the configuration of a principal part of a tenth example ; and
FIG. 11 is a diagram showing the configuration of a eleventh example.

### Best Mode for Carrying Out the Invention

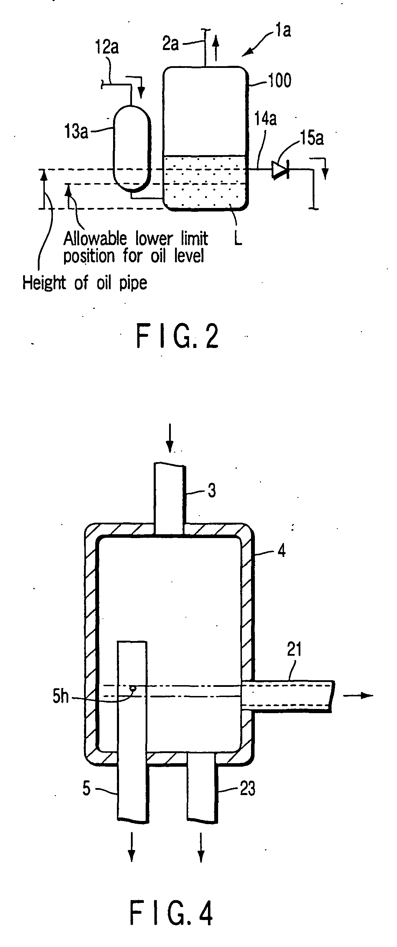

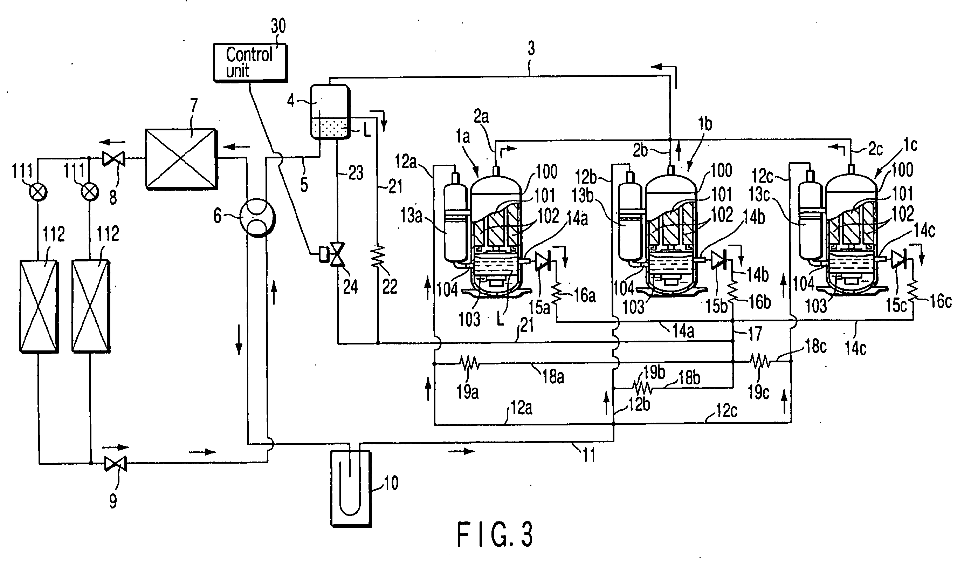

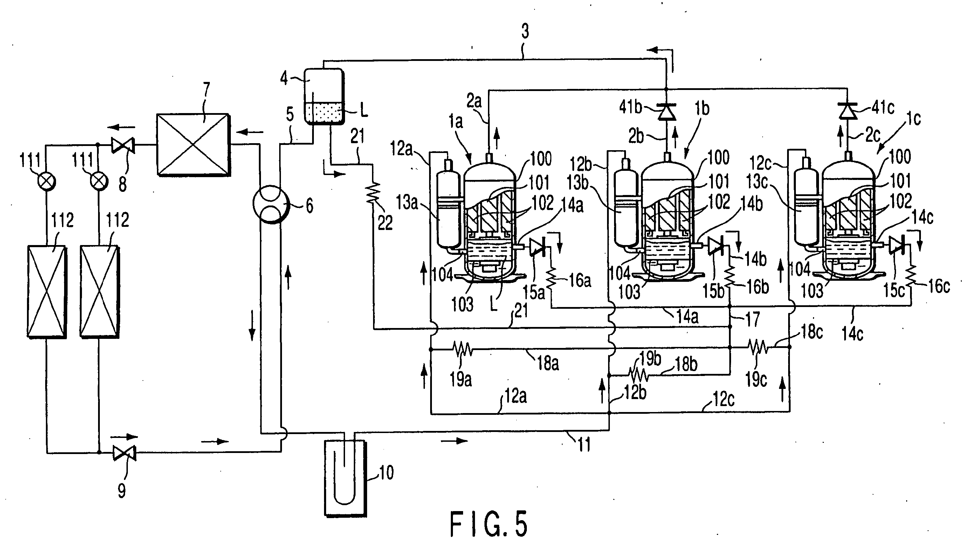

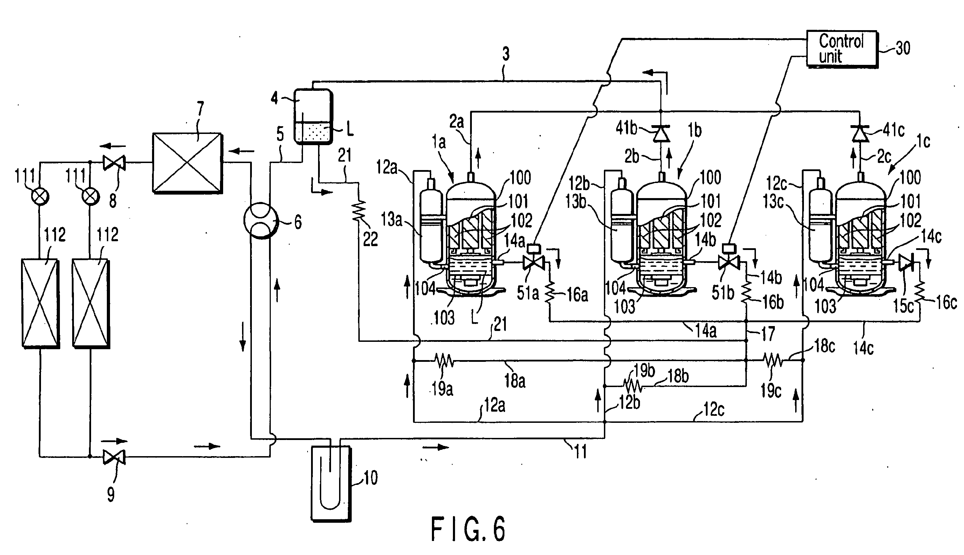

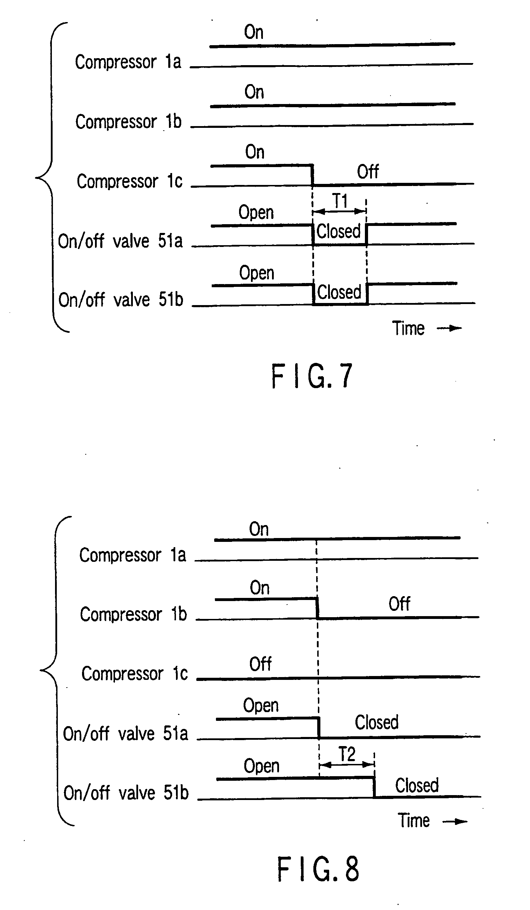

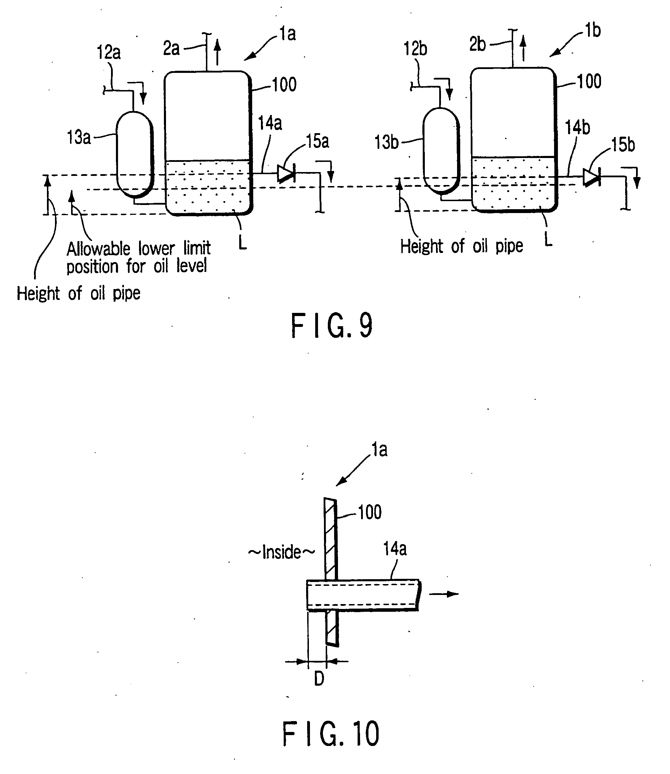

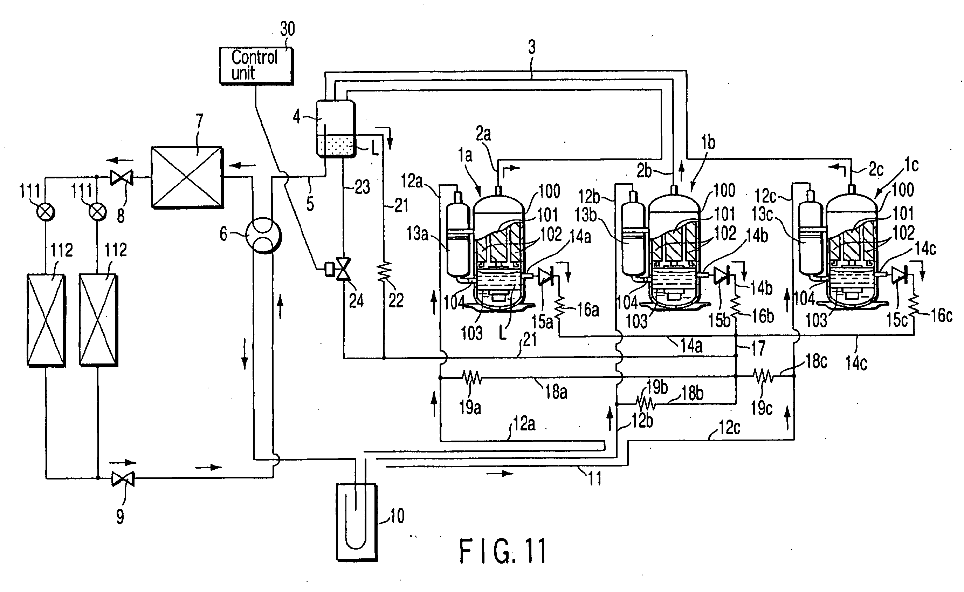

[1] A first example serving to explain certain features of this invention will now be described with reference to the drawings.

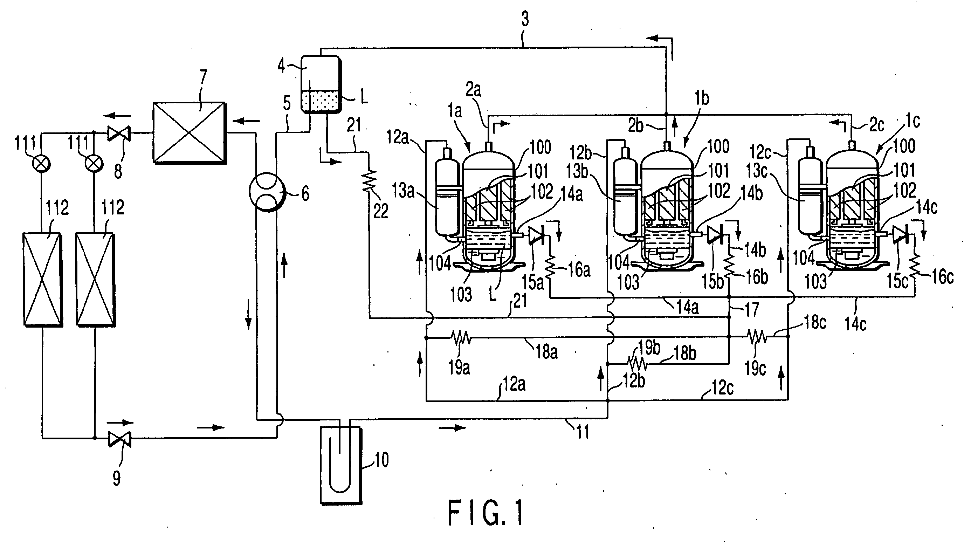

   In FIG. 1, high-pressure compressors 1a, 1b and 1c are covered by a closed casing 100 each. A motor and a compression element 103 are housed in the closed casing 100. The motor is formed of a rotor 101 and a stator 102, and the compression element 103 is driven by means of the motor. The compression element 103 sucks in a refrigerant (gaseous refrigerant) through a refrigerant inlet port 104 at the lower part of the closed casing 100, and compresses the sucked refrigerant and discharges it into the closed casing 100.
   The closed casing 100 contains a lubricating oil L for the lubrication of various components such as the compression element 103.
   The refrigerant that is discharged into the closed casing 100, along with some of the lubricating oil L, flows into a high-pressure-side pipe 3 of a refrigerating cycle through refrigerant discharge pipes 2a, 2b and 2c that are connected to the upper part of the closed casing 100.
   The refrigerant that is run through the high-pressure-side pipe 3 flows into a refrigerant pipe 5 via an oil separator 4. The oil separator 4 separates and holds the lubricating oil L that is contained by the refrigerant. The refrigerant that is run from the oil separator 4 into the refrigerant pipe 5 flows through a four-way valve 6 into an outdoor heat exchanger 7. The refrigerant (liquid refrigerant) having passed through the outdoor heat exchanger 7 flows into a plurality of indoor heat exchangers 112 via a liquid-side packed valve 8 and a plurality of expansion valves 111.
   The refrigerant (gaseous refrigerant) having passed through each indoor heat exchanger 112 flows into a low-pressure-side pipe 11 via a gas-side packed valve 9, the four-way valve 6, and an accumulator 10. The refrigerant that is run through the low-pressure-side pipe passes through refrigerant inlet pipes 12a, 12b and 12c and suction cups 13a, 13b and 13c and is sucked into the compression element 103 through the refrigerant inlet ports 104 of the respective closed casings 100 of the compressors 1a, 1b and 1c.
   Ends of first oil pipes 14a, 14b and 14c are connected to the respective closed casings 100 of the compressors 1a, 1b and 1c, respectively. The first oil pipes 14a, 14b and 14c are provided with first pressure reducing units, e.g., capillary tubes 16a, 16b and 16c, as well as check valves 15a, 15b and 15c, respectively. The other ends of the oil pipes 14a, 14b and 14c are connected to one collecting pipe 17, and second oil pipes 18a, 18b and 18c are connected between the collecting pipe 17 and the refrigerant inlet pipes 12a, 12b and 12c, respectively. The oil pipes 18a, 18b and 18c are provided with second pressure reducing units, e.g., capillary tubes 19a, 19b and 19c, respectively.
   The check valves 15a, 15b and 15c prevent the refrigerant and the lubricating oil L from flowing back from the collecting pipe 17 to the compressors 1a, 1b and 1c.
   The capillary tubes 19a, 19b and 19c have resistances (throttles) lower than those of the capillary tubes 16a, 16b and 16c.
   The following condition is set for the resistances (throttles) of the capillary tubes 16a, 16b and 16c, in consideration of the production of pressure differences between the closed casings 100 depending on differences in capacity between the compressors 1a, 1b and 1c during the operation of the compressors.
   Thus, the resistances of the capillary tubes 16a, 16b and 16c are settled so that the difference between the pressure of the lubricating oil L on the upstream side of the capillary tubes 16a, 16b and 16c and the pressure of the lubricating oil L on the downstream side of the capillary tubes 16a, 16b and 16c is greater than the maximum value of the pressure differences between the closed casings 100 when the lubricating oil L in the closed casings 100 flows into the oil pipes 14a, 14b and 14c and flows through the collecting pipe 17.
   With this condition set in this manner, the lubricating oil L having flowed into the oil pipes 14a, 14b and 14c can be securely guided into the compressors 1a, 1b and 1c through the collecting pipe 17, oil pipes 18a, 18b and 18c, and refrigerant inlet pipes 12a, 12b and 12c without being influenced by a change (change within the aforesaid maximum value), if any, of the pressure differences between the closed casings 100. The respective resistances of the capillary tubes 16a, 16b and 16c need not be given the same value. This is confirmed experimentally.
   The following is a description of the operation.
   If the compressors 1a, 1b and 1c are run, the respective internal pressures of the closed casings 100 increase. If the oil levels of the lubricating oil L in the closed casings 100 are higher than the positions of connection of the oil pipes 14a, 14b and 14c, a quantity of the lubricating oil L corresponding to the odd over the connection positions flows as surplus portions into the oil pipes 14a, 14b and 14c.
   The portions of the lubricating oil L having flowed into the oil pipes 14a, 14b and 14c pass through the capillary tubes 16a, 16b and 16c and join in the collecting pipe 17. Then, the oil is distributed to the oil pipes 18a, 18b and 18c through the collecting pipe 17. The lubricating oil L distributed to the oil pipes 18a, 18b and 18c flows into the refrigerant inlet pipes 12a, 12b and 12c through the capillary tubes 19a, 19b and 19c. The lubricating oil L that is run through the refrigerant inlet pipes 12a, 12b and 12c, along with the refrigerant circulated in the refrigerating cycle, is sucked into the compressors 1a, 1b and 1c.
   The capillary tubes 19a, 19b and 19c act as resistances as the lubricating oil L is distributed to the oil pipes 18a, 18b and 18c through the collecting pipe 17. Owing to this resistive action, the lubricating oil L in the collecting pipe 17 can be equally distributed to the oil pipes 18a, 18b and 18c. Thus, the surplus portions of the lubricating oil L in the closed casings 100 are equally supplied to the compressors 1a, 1b and 1c.
   On the other hand, the oil levels of the lubricating oil L in the closed casings 100 of the compressors 1a and 1b sometimes may become higher than the positions of connection of the oil pipes 14a and 14b, and the oil level of the lubricating oil L in the closed casing 100 of the compressor 1c lower than the connection position of the oil pipe 14c.
   In this case, the lubricating oil L flows into the oil pipes 14a and 14b of the compressors 1a and 1b, while the high-pressure gaseous refrigerant flows into the oil pipe 14c of the compressor 1c. The lubricating oil L and the gaseous refrigerant introduced in this manner join in the collecting pipe 17, and the resulting mixture is distributed to the oil pipes 18a, 18b and 18c. Thus, the surplus portions of the lubricating oil L from the compressors 1a and 1b are equally supplied to the compressors 1a, 1b and 1c.
   Therefore, a large quantity of the lubricating oil L cannot be unduly supplied to the compressor 1c. In consequence, the quantities of the lubricating oil in the compressors 1a, 1b and 1c can always be kept optimum.
   Since the oil pipes 14a, 14b and 14c are provided with the check valves 15a, 15b and 15c, respectively, the lubricating oil L can be prevented from flowing back from the oil pipes 14a, 14b and 14c into the closed casings 100.
   The resistances of the capillary tubes 19a, 19b and 19c in the oil pipes 18a, 18b and 18c are lower than the resistances of the capillary tubes 16a, 16b and 16c in the oil pipes 14a, 14b and 14c. Therefore, suction pressures of the refrigerant inlet pipes 12a, 12b and 12c can be securely transmitted to the oil pipes 14a, 14b and 14c through the oil pipes 18a, 18b and 18c and the collecting pipe 17. Thus, the lubricating oil L, having flowed from the closed casings 100 into the oil pipes 14a, 14b and 14c, can flow securely and efficiently into the refrigerant inlet pipes 12a, 12b and 12c through the collecting pipe 17 and the oil pipes 18a, 18b and 18c. The lubricating oil L neither moves between the oil pipes 14a, 14b and 14c nor stays in the oil pipes 14a, 14b and 14c.
   If the checking function of the check valves 15a, 15b and 15c is damaged, the suction pressures of the refrigerant inlet pipes 12a, 12b and 12c are securely transmitted to the oil pipes 14a, 14b and 14c through the oil pipes 18a, 18b and 18c and the collecting pipe 17. Accordingly, the lubricating oil L having flowed from the closed casings 100 into the oil pipes 14a, 14b and 14c can securely flow into the refrigerant inlet pipes 12a, 12b and 12c through the collecting pipe 17 and the oil pipes 18a, 18b and 18c. The lubricating oil L can be prevented from flowing back from the oil pipes 14a, 14b and 14c into the closed casings 100.
   If the compressors 1a, 1b and 1c are different in capacity, the internal pressure of the closed casing 100 of a larger compressor is lower than the internal pressure of the closed casing 100 of a smaller compressor. If this pressure difference occurs, there is a possibility of the lubricating oil L moving directly between the closed casings 100 through the oil pipes 14a, 14b and 14c. However, the aforesaid effect entirely obviates this possibility. Accordingly, a plurality of compressors may be used having different capacities. Further, one or a plurality of variable-speed compressors for inverter drive and one or a plurality of constant-speed compressors for commercial power supply drive may be used together.
   When the lubricating oil L flows into the oil pipes 14a, 14b and 14c, some of the gaseous refrigerant flows into the oil pipes 14a, 14b and 14c. The lubricating oil L and the gaseous refrigerant introduced in this manner join in the collecting pipe 17, and are then sucked into the compressors 1a, 1b and 1c through the oil pipes 18a, 18b and 18c and the refrigerant inlet pipes 12a, 12b and 12c. Thus, some of the gaseous refrigerant in the compressors 1a, 1b and 1c is inevitably bypassed on the suction side of the compressors 1a, 1b and 1c.
   If a large amount of the refrigerant is bypassed, the quantity of refrigerant circulation in the refrigerating cycle is reduced, so that the refrigerating capability lowers inevitably. In this case, however, the collecting pipe 17, a junction, constitutes a flow resistance that restrains the quantity of the bypassed refrigerant. This restraint can prevent reduction of the quantity of the gaseous refrigerant supplied from the compressors 1a, 1b and 1c to the refrigerating cycle. Thus, the refrigerating capability cannot be lowered.
   The temperature of the lubricating oil L that flows into the oil pipes 14a, 14b and 14c is high. If a large amount of this high-temperature lubricating oil L is bypassed on the suction side of the compressors 1a, 1b and 1c, the temperature of the refrigerant that is sucked into the compressors 1a, 1b and 1c rises extraordinarily. If the temperature of the refrigerant sucked into the compressors 1a, 1b and 1c rises extraordinarily, the running efficiency of the refrigerating cycle lowers, and the windings of the respective motors of the compressors 1a, 1b and 1c overheat inevitably. As mentioned before, however, the collecting pipe 17 serves as the flow resistance that restrains the quantity of the bypassed gaseous refrigerant. Therefore, the undesired extraordinary temperature rise of the refrigerant that is sucked into the compressors 1a, 1b and 1c can be avoided. Thus, the running efficiency of the refrigerating cycle can be prevented from lowering, and the windings of the respective motors of the compressors 1a, 1b and 1c can be prevented from overheating.
   The lubricating oil L that flows out from the respective closed casings 100 of the individual compressors are collected in the single collecting pipe 17, and the lubricating oil L collected in the collecting pipe 17 is distributed to the compressors. Thus, the lubricating oil L can be supplied equally to the compressors without regard to the number of compressors.
[2] The following is a description of a second example serving to explain certain features of the invention.
   As shown in FIG. 2, an allowable lower limit position for the oil level is predetermined in the closed casing 100 of the compressor 1a. The allowable lower limit position for the oil level is equivalent to a necessary minimum quantity of lubricating oil for the operation of the compressor 1a. The oil pipe 14a is connected at a position higher than the allowable lower limit position for the oil level.
   The allowable lower limit position for the oil level is also predetermined in the respective closed casings 100 of the compressors 1b and 1c (not shown). The oil pipes 14b and 14c are connected at positions higher than the allowable lower limit position for the oil level.
   Thus, the oil levels of the lubricating oil L in the respective closed casings 100 of the compressors 1a, 1b and 1c can be easily kept higher than the allowable lower limit position for the oil level.
   The present embodiment shares other configurations, functions, and effects with the first embodiment.
[3] The following is a description of a third example serving to explain certain features of the invention.
   As shown in FIG. 1, an oil return pipe 21 for returning the lubricating oil L in the oil separator 4 to the compressors 1a, 1b and 1c is connected between the lower part of the oil separator 4 and the collecting pipe 17. The oil return pipe 21 is provided with a third pressure reducing unit, e.g., a capillary tube 22.
   According to this arrangement, the lubricating oil L in the oil separator 4 is equally distributed to the oil pipes 18a, 18b and 18c through the oil return pipe 21 and the collecting pipe 17. The lubricating oil L distributed to the oil pipes 18a, 18b and 18c is sucked into the compressors 1a, 1b and 1c by means of the refrigerant inlet pipes 12a, 12b and 12c.
   The present example shares other configurations, functions, and effects with the first example.
[4] The following is a description of a fourth example serving to explain certain features of the invention.
   In FIG. 1, the resistances of the capillary tubes 19a, 19b and 19c of the oil pipes 18a, 18b and 18c are lower than the resistances of the capillary tubes 16a, 16b and 16c in the oil pipes 14a, 14b and 14c and lower than the resistance of the capillary tube 22 of the oil return pipe 21.
   Since the resistances of the capillary tubes 19a, 19b and 19c are lower than the resistances of the capillary tubes 16a, 16b and 16c, the suction pressures of the refrigerant inlet pipes 12a, 12b and 12c can be securely transmitted to the oil pipes 14a, 14b and 14c through the oil pipes 18a, 18b and 18c and the collecting pipe 17. Thus, the lubricating oil L, having flowed from the closed casings 100 into the oil pipes 14a, 14b and 14c, can flow securely and efficiently into the refrigerant inlet pipes 12a, 12b and 12c through the collecting pipe 17 and the oil pipes 18a, 18b and 18c. The lubricating oil L neither moves between the oil pipes 14a, 14b and 14c nor stays in the oil pipes 14a, 14b and 14c.
   Since the resistances of the capillary tubes 19a, 19b and 19c are lower than the resistance of the capillary tube 22, the suction pressures of the refrigerant inlet pipes 12a, 12b and 12c can be securely transmitted to the oil pipes 14a, 14b and 14c through the oil pipes 18a, 18b and 18c and the collecting pipe 17. Thus, the lubricating oil L, having flowed from the oil separator 4 to the oil return pipe 21, can flow securely and efficiently into the refrigerant inlet pipes 12a, 12b and 12c through the collecting pipe 17 and the oil pipes 18a, 18b and 18c. The lubricating oil L in the oil return pipe 21 never flows toward the oil pipes 14a, 14b and 14c through the collecting pipe 17.
   The present example shares other configurations, functions, and effects with the first and third examples.
[5] The following is a description of a fifth example serving to explain certain features of the invention.
   As shown in FIG. 3, the oil return pipe 21 is connected to the side face of the oil separator 4 at a given height position. That portion of the lubricating oil L in the oil separator 4 which is located above the position of connection of the oil return pipe 21 flows into the oil return pipe 21 and is guided through the capillary tube 22 into the collecting pipe 17.
   One end of an oil return pipe 23 is connected to the underside portion of the oil separator 4, and the other end of the oil return pipe 23 is connected to the collecting pipe 17. The oil return pipe 23 is provided with an on/off valve 24. If the on/off valve 24 opens, the lubricating oil L in the oil separator 4 is guided through the oil return pipe 23 into the collecting pipe 17.
   The on/off valve 24 is controlled by means of a control unit 30. The control unit 30 opens the on/off valve 24 in a situation such that the oil levels of the lubricating oil L in the respective closed casings 100 of the compressors 1a, 1b and 1c easily lower, e.g., at the start of operation of the compressors or at the time of defrosting operation.
   If the oil level of the lubricating oil L in the oil separator 4 is higher than the position of connection of the oil return pipe 21, according to this arrangement, a quantity of the lubricating oil L corresponding to the odd over the connection position flows into the oil return pipe 21 and is guided through the capillary tube 22 into the collecting pipe 17.
   At the start of operation of the compressors or at the time of defrosting operation when the oil levels of the lubricating oil L in the respective closed casings 100 of the compressors 1a, 1b and 1c easily lower, the on/off valve 24 opens to allow the lubricating oil L in the oil separator 4 to be guided through the oil return pipe 23 into the collecting pipe 17.
   The lubricating oil L guided into the collecting pipe 17 is supplied to the compressors 1a, 1b and 1c through the oil pipes 18a, 18b and 18c and the refrigerant inlet pipes 12a, 12b and 12c. This supply restrains the oil levels of the lubricating oil L in the closed casings 100 from lowering.
   The present example shares other configurations, functions, and effects with the first, third, and fourth examples.
[6] The following is a description of a first embodiment.
   The description of this first embodiment is limited to the configuration of the refrigerant pipe 5 according to the fifth example.
   As shown in FIG. 4, the refrigerant pipe 5 through which the refrigerant in the oil separator 4 flows out is inserted into the oil separator 4 through the bottom of the oil separator 4.
   The refrigerant pipe 5 has at least one opening 5h through which the lubricating oil L in the oil separator 4 is fetched. The position of the opening 5h corresponds to a location between the top position (position indicated by two-dot chain line in the drawing) of the inside diameter of the oil return pipe 21 that is connected to the sidewall of the oil separator 4 and the center position (position indicated by dashed line in the drawing) of the inside diameter of the oil return pipe 21.
   Based on the relation between the height position of the opening 5h and the height position of the oil inlet of the oil return pipe 21, the quantity of the lubricating oil L that flows into the oil return pipe 21 is larger than the quantity of the lubricating oil L that flows into the opening 5h.
   Thus, in order to securely cope with lubricating oil shortage in the compressors 1a, 1b and 1c, the quantity of return flows of the lubricating oil L from the oil separator 4 to the compressors 1a, 1b and 1c is made larger than the outflow of the lubricating oil L from the oil separator 4 into the refrigerating cycle.
   The present embodiment shares other configurations, functions, and effects with the fifth example.
[7] The following is a description of a second embodiment.
   In FIG. 3, the resistance of the capillary tube 22 of the oil return pipe 21 is higher than the resistances of capillary tubes 16a, 16b and 16c of the oil pipes 14a, 14b and 14c.
   With this arrangement, the lubricating oil L having flowed from the oil pipes 14a, 14b and 14c to the collecting pipe 17 never flows back to the oil separator 4 through the oil return pipe 21.
   The present embodiment shares other configurations, functions, and effects with the first and third examples.
[8] The following is a description of an sixth example serving to explain certain features of the invention.
   The compressor 1a enjoys the first priority order of operation. The compressors 1b and 1c are second and third, respectively, in the priority order of operation, and are objects to be stopped for capability control (running unit count control).
   If a high refrigerating capability is required, all the compressors 1a, 1b and 1c are run. If a medium refrigerating capability is required, the two compressors 1b and 1c are run. If a low refrigerating capability is required, only the compressor 1a is run.
   As shown in FIG. 5, the respective refrigerant discharge pipes 2b and 2c of the compressors 1b and 1c, which are second and third, respectively, in the priority order of operation, are provided with check valves 41b and 41c, respectively. The refrigerant discharge pipe 2a of the compressor 1a with the first priority order of operation is not provided with any check valve.
   If the compressors 1b and 1c are stopped, the internal pressures of the respective closed casings 100 of the compressors 1b and 1c are lowered toward the low-pressure-side pressure of the refrigerating cycle through the refrigerant inlet pipes 12b and 12c. Although the pressure of the refrigerant that is discharged from the running compressor 1a is then urged to act on the interior of the respective closed casings 100 of the compressors 1b and 1c through the refrigerant discharge pipes 2b and 2c, the application of the pressure is prevented by the check valves 41b and 41c. This prevention causes the internal pressures of the respective closed casings 100 of the compressors 1b and 1c to lower quickly to the low-pressure-side pressure of the refrigerating cycle.
   The lubricating oil L having flowed from the closed casing 100 of the running compressor 1a into the oil pipe 14a passes through the collecting pipe 17, oil pipe 18a, and inlet pipe 12a and is recovered by the compressor 1a. As this is done, the lubricating oil L that is run through the collecting pipe 17 is urged to flow into the respective closed casings 100 of the compressors 1b and 1c through the oil pipes 18b and 18c and the oil pipes 14b and 14c. Since the oil pipes 14b and 14c are provided with the check valves 15b and 15c, respectively, however, there is no possibility of the lubricating oil L in the collecting pipe 17 uselessly flowing through the respective closed casings 100 of the compressors 1b and 1c.
   The present example shares other configurations, functions, and effects with the first and third examples.
[9] The following is a description of a seventh example serving to explain certain features of the invention.
   As shown in FIG. 6, the respective refrigerant discharge pipes 2b and 2c of the compressors 1b and 1c, which are second and third, respectively, in the priority order of operation, are provided with the check valves 41b and 41c, respectively. The refrigerant discharge pipe 2a of the compressor 1a with the first priority order of operation is not provided with any check valve.
   Instead of the check valves 15a and 15b, on/off valves 51a and 51b are located, respectively, in the oil pipes 14a and 14b of the compressors 1a and 1b that are higher in priority order of operation. The on/off valves 51a and 51b are controlled by means of the control unit 30.
   As shown in the timing chart of FIG. 7, the control unit 30 closes the on/off valves 51a and 51b corresponding to the running compressors 1a and 1b for a given time T1 when the compressors 1a and 1b, among the compressors 1a, 1b and 1c, are running with the remaining compressor 1c stopped.
   If the compressor 1c is stopped, the internal pressure of the closed casing 100 of the compressor 1c is lowered toward the low-pressure-side pressure of the refrigerating cycle through the refrigerant inlet pipe 12c. In this process of lowering, the refrigerant in the closed casing 100 of the compressor 1c, along with the lubricating oil L, is urged to leak out into the refrigerant inlet pipe 12c through a high-low pressure seal portion of the compression element 103 in the closed casing 100. However, this leakage can be prevented by closing the on/off valves 51a and 51b for the given time T1.
   Thus, while the on/off valves 51a and 51b are closed, the suction pressures that are transmitted from the refrigerant inlet pipes 12a and 12b to the collecting pipe 17 effectively act on the closed casing 100 of the compressor 1c through the oil pipe 14c. This action causes the internal pressure of the closed casing 100 of the compressor 1c to lower quickly to the low-pressure-side pressure. This quick lowering prevents the refrigerant and the lubricating oil L from leaking out from the closed casing 100 of the compressor 1c into the refrigerant inlet pipe 12c.
   Since the leakage of the lubricating oil L is prevented in this manner, the lubricating oil can be prevented from running out when the compressor 1c is started next. In consequence, the compression element 3 of the compressor 1c can avoid being damaged.
   As described above, moreover, the suction pressures that are transmitted from the refrigerant inlet pipes 12a and 12b to the collecting pipe 17 effectively act on the closed casing 100 of the compressor 1c through the oil pipe 14c. Thus, the surplus portion of the lubricating oil L in the closed casing 100 of the compressor 1c can efficiently flows through the oil pipe 14c into the collecting pipe 17. The lubricating oil L run through the collecting pipe 17 can be efficiently supplied to the running compressors 1a and 1b through the oil pipes 18a and 18b and the refrigerant inlet pipes 12a and 12b. Further, the lubricating oil L can be prevented from uselessly staying in the closed casing 100 of the compressor 1c.
   Although the pressure of the refrigerant that is discharged from the running compressors 1a and 1b is urged to act on the interior of the closed casing 100 of the compressor 1c through the refrigerant discharge pipe 2c, the application of the pressure is prevented by the check valve 41c. This prevention also causes the internal pressure of the closed casing 100 of the compressor 1c to lower quickly to the low-pressure-side pressure of the refrigerating cycle.
   The present example shares other configurations, functions, and effects with the first and third examples.
[10] The following is a description of an eighth example serving to explain certain features of the invention.
   In this eighth example, a new function is additionally given to the control unit 30 of the seventh example.
   As shown in the timing chart of FIG. 8, the control unit 30 keeps the on/off valves 51a and 51b open while the compressors 1a and 1b are running. If the running compressor 1b is stopped to leave the compressor 1a to run singly, the control unit 30 immediately closes the on/off valve 51a that corresponds to the compressor 1a, and closes the on/off valve 51b that corresponds to the newly stopped compressor 1b after the passage of a given time T2.
   If the on/off valve 51a is closed, the lubricating oil L ceases to flow out uselessly from the running compressor 1a into the oil pipe 14a. Thereupon, the compressor 1a can be run efficiently. Thus, the lubricating oil L can be homogenized with less energy consumption, and the capability of the compressor 1a can be effectively utilized for the operation of the refrigerating cycle only.
   The on/off valve 51b is kept open for the given time T2. The maintenance of this open state causes the internal pressure of the closed casing 100 of the compressor 1b to lower quickly to the low-pressure-side pressure. Further, the surplus portion of the lubricating oil L in the closed casing 100 of the compressor 1b can be efficiently supplied to the running compressor 1a
   After the passage of the given time T2, the on/off valve 51b is closed, whereupon the lubricating oil L ceases to flow out uselessly from the stopped compressor 1b into the oil pipe 14b.
   The present example shares other configurations, functions, and effects with the seventh example.
[11] The following is a description of an ninth example serving to explain certain features of the invention.
   According to this example, the positions of connection of the oil pipes 14a, 14b and 14c to the respective casings of the compressors of the seventh example are defined.
   In the compressor 1a that enjoys the first priority order of operation, as shown in FIG. 9, the connection position of the oil pipe 14a is set so that the quantity of the lubricating oil L held between the allowable lower limit position for the oil level of the closed casing 100 and the oil inlet of the oil pipe 14a is larger than the quantity of the lubricating oil L held between allowable lower limit positions for the oil levels of the respective closed casings 100 of the other compressors 1b and 1c and the respective oil inlets of the oil pipes 14b and 14c.
   Thus, in view of steady appropriate operation, a larger quantity of the lubricating oil L is reserved for the compressor 1a that runs longer than the compressors 1b and 1c.
   The present example shares other configurations, functions, and effects with the seventh example.
[12] The following is a description of a tenth example serving to explain certain features of the invention.
   According to the tenth example, the connection configuration of the oil pipes 14a, 14b and 14c to the respective casings of the compressors of the foregoing examples and embodiments is defined.
   As shown in FIG. 10, the oil pipe 14a penetrates the sidewall of the closed casing 100 of the compressor 1a so as to project for a given length D in the closed casing 100. The other oil pipes 14b and 14c are arranged in the same manner.
   With use of this configuration, the lubricating oil L that falls down along the inner peripheral surfaces of the respective sidewalls of closed casings 100 cannot easily flow into the oil pipes 14a, 14b and 14c. Only those surplus portions of the lubricating oil L in the closed casings 100 which are located higher than the oil pipes 14a, 14b and 14c flow into the oil pipes 14a, 14b and 14c.
   Thus, the quantity of return flows of the lubricating oil L from the compressors 1a, 1b and 1c to the oil pipes 14a, 14b and 14c can be kept appropriate. The lubricating oil L can be homogenized with higher reliability.
[13] The following is a description of an eleventh example serving to explain certain features of the invention.
   As shown in FIG. 11, the individual refrigerant discharge pipes 2a, 2b and 2c are connected directly to the oil separator 4 without the interposition of the high-pressure-side pipe 3. The individual refrigerant inlet pipes 12a, 12b and 12c are connected directly to the accumulator 10 without the interposition of the low-pressure-side pipe 11.
   Thus, there is no flow resistance based on the high-pressure-side pipe 3 between the oil separator 4 and the refrigerant discharge pipes 2a, 2b and 2c, so that the refrigerant that is discharged from the compressors 1a, 1b and 1c can be efficiently supplied to the refrigerating cycle. Since there is flow resistance based on the low-pressure-side pipe 11 between the accumulator 10 and the refrigerant inlet pipes 12a, 12b and 12c, the refrigerant having circulated through the refrigerating cycle can be efficiently sucked into the compressors 1a, 1b and 1c.
   The present example shares other configurations, functions, and effects with the fifth example.

## Claims

1. A refrigerating apparatus comprising:
a plurality of compressors (1a,1b,1c) which, in operation, suck in and discharge a refrigerant, the compressors (1a,1b,1c) being covered by a closed casing (100) which respectively contains the refrigerant and a lubricating oil (L);
a plurality of mutually connected refrigerant discharge pipes (2a,2b,2c) through which the refrigerant discharged from the compressors (1a,1b,1c) passes;
a plurality of mutually connected refrigerant inlet pipes (12a,12b,12c) through which the refrigerant is sucked into the compressors (1a,1b,1c);
a plurality of first oil pipes (14a,14b,14c) for receiving surplus portions of the lubricating oil (L) in the respective closed casings (100) of the compressors (1a,1b,1c);
a collecting pipe (17) for joining the lubricating oil (L) from the first oil pipes (14a,14b,14c);
a plurality of second oil pipes (18a,18b,18c) for distributing the lubricating oil (L) from the collecting pipe (17) to the refrigerant inlet pipes (12a,12b,12c), individually;
a plurality of first pressure reducing units (16a,16b,16c) located in the first oil pipes (14a,14b,14c), individually;
a plurality of second pressure reducing units (19a,19b,19c) located in the second oil pipes (18a,18b,18c), individually;
an oil separator (4) for receiving the refrigerant from the refrigerant discharge pipes (2a,2b,2c) and for separating and holding the lubricating oil (L) contained in the refrigerant;
an oil return pipe (21) connected to a side face of the oil separator (4) for returning a portion of the lubricating oil (L) separated by the oil separator (4) to the collecting pipe (17);
a third pressure reducing unit (22) located in the oil return pipe (21); and
a refrigerant pipe (5) through which the refrigerant flows out from the oil separator (4), wherein the refrigerant pipe (5) is inserted into the oil separator (4),
**characterized in that**
the refrigerant pipe (5) includes at least one opening (5h) through which a part of the lubricating oil (L) in the oil separator (4) is fetched, the position of the opening (5h) corresponding to a location between the top position and the center position of the inside diameter of the oil return pipe (21) connected to the side face of the oil separator (4).

2. A refrigerating apparatus according to claim 1, which further comprises a plurality of check valves (15a,15b,15c) for backflow prevention located in the first oil pipes (14a,14b,14c), individually.

3. A refrigerating apparatus according to claim 1 or 2, wherein the first oil pipes (14a,14b,14c) are connected individually to the respective closed casings (100) of the compressors (1a,1b,1c), the positions of the connections being higher than a predetermined allowable lower limit position for the oil level.

4. A refrigerating apparatus according to any one of claims 1 to 3, wherein the resistances of the second pressure reducing units (19a,19b,19c) are higher than the resistances of the first pressure reducing units (16a,16b,16c).

5. A refrigerating apparatus according to any one of claims 1 to 4, wherein the first pressure reducing units (16a,16b,16c) and the second pressure reducing units (19a,19b,19c) are formed by capillary tubes.

6. A refrigerating apparatus according to claim 1, wherein the compressors (1a,1b,1c) are different in priority order of operation.

7. A refrigerating apparatus according to claim 6, further comprising one or a plurality of check valves (41b,41c) located in one or a plurality of the refrigerant discharge pipes (2a,2b,2c) corresponding to one or a plurality of the compressors (1a,1b,1c) not higher in the priority order.

8. A refrigerating apparatus according to claim 6, further comprising:
a plurality of on/off valves (51a,51b) located individually in a plurality of the first oil pipes (14a,14b,14c) corresponding to a plurality of the compressors (1a,1b,1c) higher in the priority order; and
a control unit (30) for closing the on/off valves (51a,51b) corresponding to a plurality of running compressors for a given time when a plurality of compressors (1a,1b) higher in the priority order are running with the remaining compressor(s) (1c) stopped.

9. A refrigerating apparatus according to claim 6, further comprising:
a plurality of on/off valves (51a,51b) located individually in a plurality of the first oil pipes (14a,14b,14c) corresponding to a plurality of the compressors (1a,1b,1c) higher in the priority order; and
a control unit (30) for opening the on/off valves (51a,51b) when said plurality of compressors (1a,1b) higher in the priority order are running and immediately closing the on/off valves (51a,51b) corresponding to the running compressors and closing the on/off valve (51a,51b) corresponding to the stopped compressor after the passage of a given time if at least one of the running compressors is stopped.

10. A refrigerating apparatus according to claim 6, wherein the quantity of the lubricating oil (L) held between an allowable lower limit position for the oil level of the closed casing (100) of the compressor (1a) with the first priority order and the oil inlet of first oil pipe (14a), into which the lubricating oil (L) in the closed casing (100) flows, is larger than the quantity of the lubricating oil (L) held between allowable lower limit positions for the oil levels of the respective closed casings (100) of the other compressors (1b,1c) and the oil inlets of the first oil pipes (14b,14c), into which the lubricating oil in the closed casings (100) flows.

11. A refrigerating apparatus according to claim 1, wherein each said first oil pipes (14a,14b,14c) penetrates the sidewall of the closed casing (100) of the respective compressor (1a,1b,1c) so as to project for a given length (D) in the closed casing (100).

## Patentansprüche

1. Eine Kühleinrichtung mit:
einer Vielzahl von Kompressoren (1a,1b,1c), welche im Betrieb ein Kühlmittel ansaugen und austragen, wobei die Kompressoren (1a,1b,1c) durch ein geschlossenes Gehäuse (100) abgedeckt sind, welches jeweils das Kühlmittel und ein Schmieröl (L) enthält,
einer Vielzahl von miteinander verbundenen Kühlmittel-Austragleitungen (2a,2b,2c), durch welche das von den Kompressoren (1a,1b,1c) ausgetragene Kühlmittel strömt,
einer Vielzahl von miteinander verbundenen Kühlmittel-Einlassleitungen (12a,12b,12c), durch welche das Kühlmittel in die Kompressoren (1a,1b,1c) angesaugt wird,
einer Vielzahl von ersten Ölleitungen (14a,14b,14c) zum Aufnehmen überschüssiger Mengen des Schmieröls (L) in den jeweiligen geschlossenen Gehäusen (100) der Kompressoren (1a,1b,1c),
einer Sammelleitung (17) zum Zusammenführen des Schmieröls (L) von den ersten Ölleitungen (14a,14b,14c),
einer Vielzahl von zweiten Ölleitungen (18a,18b,18c) zum individuellen Verteilen des Schmieröls (L) von der Sammelleitung (17) an die Kühlmittel-Einlassleitungen (12a,12b,12c),
einer Vielzahl von ersten Druckreduzierungseinheiten (16a,16b,16c), welche individuell in den ersten Ölleitungen (14a,14b,14c) angeordnet sind,
einer Vielzahl von zweiten Druckreduzierungseinheiten (19a,19b,19c), welche individuell in den zweiten Ölleitungen (18a,18b,18c) angeordnet sind,
einem Ölseparator (4) zum Aufnehmen des Kühlmittels von den Kühlmittel-Austragleitungen (2a,2b,2c) und zum Separieren und Halten des in dem Kühlmittel enthaltenen Schmieröls (L),
einer Ölrückführleitung (21), welche mit einer Seitenfläche des Ölseparators (4) zum Rückführen einer Menge des Schmieröls (L), welches durch den Ölseparator (4) separiert wurde, an die Sammelleitung (17) verbunden ist,
einer dritten Druckreduzierungseinheit (22), welche in der Ölrückführleitung (21) angeordnet ist, und
einer Kühlmittelleitung (5), durch welche das Kühlmittel aus dem Ölseparator (4) strömt, wobei die Kühlmittelleitung (5) in den Ölseparator (4) eingeführt ist,
**dadurch gekennzeichnet, dass** die Kühlmittelleitung (5) mindestens eine Öffnung (5h) aufweist, durch welche ein Teil des Schmieröls (L) in dem Ölseparator (4) geholt wird, wobei die Position der Öffnung (5h) mit einem Ort zwischen der oberen Position und der mittleren Position des Innendurchmessers der Ölrückführleitung (21), welche mit der Seitenfläche des Ölseparators (4) verbunden ist, korrespondiert.

2. Eine Kühleinrichtung gemäß Anspruch 1, welche ferner eine Vielzahl von Absperrventilen (15a,15b,15c) umfasst, die individuell in den ersten Ölleitungen (14a,14b,14c) zur Prävention von Rückströmung angeordnet sind.

3. Eine Kühleinrichtung gemäß Anspruch 1 oder 2, wobei die ersten Ölleitungen (14a,14b,14c) individuell mit den jeweiligen geschlossenen Gehäusen (100) der Kompressoren (1a,1b,1c) verbunden sind, wobei die Positionen der Verbindungen höher liegen als eine vorbestimmte zulässige untere Grenzposition für das Ölniveau.

4. Eine Kühleinrichtung gemäß einem der Ansprüche 1 bis 3, wobei die Widerstände der zweiten Druckreduzierungseinheiten (19a,19b,19c) höher sind als die Widerstände der ersten Druckreduzierungseinheiten (16a,16b,16c).

5. Eine Kühleinrichtung gemäß einem der Ansprüche 1 bis 4, wobei die ersten Druckreduzierungseinheiten (16a,16b,16c) und die zweiten Druckreduzierungseinheiten (19a,19b,19c) durch Kapillarröhrchen ausgebildet sind.

6. Eine Kühleinrichtung gemäß Anspruch 1, wobei die Kompressoren (1a,1b,1c) einen unterschiedlichen Betriebs-Prioritätsrang aufweisen.

7. Eine Kühleinrichtung gemäß Anspruch 6, ferner mit einem oder einer Vielzahl von Abstellventil(en) (41b,41c), welche in einer oder in einer Vielzahl der Kühlmittel-Austrageleitung(en) (2a,2b,2c) angeordnet sind, die zu einem oder einer Vielzahl der Kompressoren (1a,1b,1c) korrespondieren, die in dem Prioritätsrang nicht höher liegen.

8. Eine Kühleinrichtung gemäß Anspruch 6, ferner mit:
einer Vielzahl von An/Aus-Ventilen (51a,51b), welche individuell in einer Vielzahl der ersten Ölleitungen (14a,14b,14c) angeordnet sind, die mit einer Vielzahl der Kompressoren (1a,1b,1c) korrespondieren, welche in dem Prioritätsrang höher liegen, und
einer Steuereinheit (30) zum Schließen der An/Aus-Ventile (51a,51b), welche mit einer Vielzahl von laufenden Kompressoren für eine gegebene Zeit korrespondieren, wenn eine Vielzahl der Kompressoren (1a,1b), welche in dem Prioritätsrang höher liegen, laufen und der/die verbleibende(n) Kompressor(en) (1c) gestoppt ist/sind.

9. Eine Kühleinrichtung gemäß Anspruch 6, ferner mit:
einer Vielzahl von An/Aus-Ventilen (51a,51b), welche individuell in einer Vielzahl der ersten Ölleitungen (14a,14b,14c) angeordnet sind, die mit einer Vielzahl der Kompressoren (1a,1b,1c) korrespondieren, welche in dem Prioritätsrang höher liegen, und
einer Steuereinheit (30) zum Öffnen der An/Aus-Ventile (51a,51b), wenn die Vielzahl der Kompressoren (1a,1b), die in dem Prioritätsrang höher liegen, laufen, und zum unmittelbaren Schließen der An/Aus-Ventile (51a,51b), welche mit den laufenden Kompressoren korrespondieren, und zum Schließen des An/Aus-Ventils (51a,51b), welches mit dem gestoppten Kompressor korrespondiert, nach dem Verstreichen einer gegebenen Zeit, falls mindestens einer der laufenden Kompressoren gestoppt ist.

10. Eine Kühleinrichtung gemäß Anspruch 6, wobei die Menge des Schmieröls (L), welche zwischen einer zulässigen unteren Grenzposition für das Ölniveau des geschlossenen Gehäuses (100) des Kompressors (1a) mit dem ersten Prioritätsrang und dem Öleinlass der ersten Ölleitung (14a), in welche das Schmieröl (L) in das geschlossene Gehäuse (100) strömt, gehalten ist, höher ist als die Menge des Schmieröls (L), welche zwischen zulässigen unteren Grenzpositionen für die Ölniveaus der entsprechenden geschlossenen Gehäuse (100) der anderen Kompressoren (1b,1c) und den Öleinlässen der ersten Ölleitung (14b,14c), in welche das Schmieröl in die geschlossenen Gehäuse (100) strömt, gehalten ist.

11. Eine Kühleinrichtung gemäß Anspruch 1, wobei jede der ersten Ölleitungen (14a,14b,14c) die Seitenwand des geschlossenen Gehäuses (100) des jeweiligen Kompressors (1a,1b,1c) derart durchdringt, dass sie um eine gegebene Länge (D) in das geschlossene Gehäuse (100) hineinragt.

## Revendications

1. Appareil de réfrigération comprenant :
une pluralité de compresseurs (1a, 1b, 1c) qui, en fonctionnement, aspirent et déchargent un réfrigérant, les compresseurs (1a, 1b, 1c) étant couverts par un boîtier fermé (100) qui contient respectivement le réfrigérant et une huile de lubrification (L) ;
une pluralité de tuyaux de décharge de réfrigérant (2a, 2b, 2c) mutuellement raccordés à travers lesquels le réfrigérant déchargé des compresseurs (1a, 1b, 1c) passe ;
une pluralité de tuyaux d'entrée de réfrigérant (12a, 12b, 12c) mutuellement raccordés à travers lesquels le réfrigérant est aspiré dans les compresseurs (1a, 1b, 1c) ;
une pluralité de premiers tuyaux d'huile (14a, 14b, 14c) pour recevoir les parties excédentaires de l'huile de lubrification (L) dans les boîtiers fermés (100) respectifs des compresseurs (1a, 1b, 1c) ;
un tuyau de collecte (17) pour assembler l'huile de lubrification (L) provenant des premiers tuyaux d'huile (14a, 14b, 14c) ;
une pluralité de seconds tuyaux d'huile (18a, 18b, 18c) pour distribuer l'huile de lubrification (L) du tuyau de collecte (17) aux tuyaux d'entrée de réfrigérant (12a, 12b, 12c), individuellement ;
une pluralité de premières unités de réduction de pression (16a, 16b, 16c) positionnées dans les premiers tuyaux d'huile (14a, 14b, 14c) individuellement ;
une pluralité de deuxièmes unités de réduction de pression (19a, 19b, 19c) positionnées dans les seconds tuyaux d'huile (18a, 18b, 18c) individuellement ;
un séparateur d'huile (4) pour recevoir le réfrigérant des tuyaux de décharge de réfrigérant (2a, 2b, 2c) et pour séparer et maintenir l'huile de lubrification (L) contenue dans le réfrigérant ;
un tuyau de retour d'huile (21) raccordé à une face latérale du séparateur d'huile (4) pour ramener une partie de l'huile de lubrification (L) séparée par le séparateur d'huile (4), au tuyau de collecte (17) ;
une troisième unité de réduction de pression (22) positionnée dans le tuyau de retour d'huile (21) ; et
un tuyau de réfrigérant (5) à travers lequel le réfrigérant sort du séparateur d'huile (4), dans lequel le tuyau de réfrigérant (5) est inséré dans le séparateur d'huile (4),
**caractérisé en ce que**
le tuyau de réfrigérant (5) comprend au moins une ouverture (5h) à travers laquelle une partie de l'huile de lubrification (L) dans le séparateur d'huile (4) est poussée, la position de l'ouverture (5h) correspondant à un emplacement situé entre la position supérieure et la position centrale du diamètre interne du tuyau de retour d'huile (21) raccordé à la face latérale du séparateur d'huile (4).

2. Appareil de réfrigération selon la revendication 1, qui comprend en outre une pluralité de soupapes anti-retour (15a, 15b, 15c) pour empêcher le refoulement dans les premiers tuyaux d'huile (14a, 14b, 14c), individuellement.

3. Appareil de réfrigération selon la revendication 1 ou 2, dans lequel les premiers tuyaux d'huile (14a, 14b, 14c) sont raccordés individuellement aux boîtiers fermés (100) respectifs des compresseurs (1a, 1b, 1c), les positions des raccordements étant plus hautes qu'une position de limite inférieure admissible prédéterminée pour le niveau d'huile.

4. Appareil de réfrigération selon l'une quelconque des revendications 1 à 3, dans lequel les résistances des deuxièmes unités de réduction de pression (19a, 19b, 19c) sont supérieures aux résistances des premières unités de réduction de pression (16a, 16b, 16c).

5. Appareil de réfrigération selon l'une quelconque des revendications 1 à 4, dans lequel les premières unités de réduction de pression (16a, 16b, 16c) et les deuxièmes unités de réduction de pression (19a, 19b, 19c) sont formées par des tubes capillaires.

6. Appareil de réfrigération selon la revendication 1, dans lequel les compresseurs (1a, 1b, 1c) sont différents concernant l'ordre de priorité de fonctionnement.

7. Appareil de réfrigération selon la revendication 6, comprenant en outre une ou une pluralité de soupapes anti-retour (41b, 41c) positionnées dans l'un ou une pluralité de tuyaux de décharge de réfrigérant (2a, 2b, 2c) correspondant à un ou une pluralité de compresseurs (1a, 1b, 1c) non supérieurs dans l'ordre de priorité.

8. Appareil de réfrigération selon la revendication 6, comprenant en outre :
une pluralité de soupapes de marche/arrêt (51a, 51b) positionnées individuellement dans une pluralité de premiers tuyaux d'huile (14a, 14b, 14c) correspondant à une pluralité de compresseurs (1a, 1b, 1c) supérieurs dans l'ordre de priorité ; et
une unité de commande (30) pour fermer les soupapes de marche/arrêt (51a, 51b) correspondant à une pluralité de compresseurs en fonctionnement pendant un moment donné lorsqu'une pluralité de compresseurs (1a, 1b) supérieurs dans l'ordre de priorité fonctionnent avec le (les) compresseur(s) (1c) restant(s) arrêté(s).

9. Appareil de réfrigération selon la revendication 6, comprenant en outre :
une pluralité de soupapes de marche/arrêt (51a, 51b) positionnées individuellement dans une pluralité de premiers tuyaux d'huile (14a, 14b, 14c) correspondant à une pluralité de compresseurs (1a, 1b, 1c) supérieurs dans l'ordre de priorité ; et
une unité de commande (30) pour ouvrir les soupapes de marche/arrêt (51a, 51b) lorsque ladite pluralité de compresseurs (1a, 1b) supérieurs dans l'ordre de priorité fonctionnent et ferment immédiatement les soupapes de marche/arrêt (51a, 51b) correspondant aux compresseurs en fonctionnement et ferment la soupape de marche/arrêt (51a, 51b) correspondant au compresseur arrêté après l'écoulement d'un temps donné si au moins l'un des compresseurs en fonctionnement est arrêté.

10. Appareil de réfrigération selon la revendication 6, dans lequel la quantité d'huile de lubrification (L) maintenue entre une position de limite inférieure admissible pour le niveau d'huile du boîtier fermé (100) du compresseur (1a) avec le premier ordre de priorité et l'entrée d'huile du premier tuyau d'huile (14a) dans laquelle l'huile de lubrification (L) dans le boîtier fermé (100) s'écoule, est supérieure à la quantité d'huile de lubrification (L) maintenue entre les positions de limite inférieure admissibles pour les niveaux d'huile des boîtiers fermés (100) respectifs des autres compresseurs (1b, 1c) et les entrées d'huile des premiers tuyaux d'huile (14b, 14c), dans lesquels l'huile de lubrification dans les boîtiers fermés (100) s'écoule.

11. Appareil de réfrigération selon la revendication 1, dans lequel chacun des premiers tuyaux d'huile (14a, 14b, 14c) pénètre dans la paroi latérale du boîtier fermé (100) du compresseur (1a, 1b, 1c) respectif afin de faire saillie sur une longueur donnée (D) dans le boîtier fermé (100).
